(19) Europäisches Patentamt
European Patent Office
Office européen des brevets

(11) Veröffentlichungsnummer: **0 041 155**
**A1**

(12) # EUROPÄISCHE PATENTANMELDUNG

(21) Anmeldenummer: **81103608.6**

(22) Anmeldetag: **12.05.81**

(51) Int. Cl.³: **C 08 L 83/04**
**G 21 F 1/10**

(30) Priorität: **14.05.80 DE 3018548**

(43) Veröffentlichungstag der Anmeldung:
**09.12.81 Patentblatt 81/49**

(84) Benannte Vertragsstaaten:
**AT BE DE FR GB IT NL SE**

(71) Anmelder: **WACKER-CHEMIE GMBH**
**Prinzregentenstrasse 22**
**D-8000 München 22(DE)**

(72) Erfinder: **Wolfer, Dietrich, Dr. Dipl.-Chem.**
**A-5110 Untereching 88/Salzburg(AT)**

(72) Erfinder: **Lipp, Alfred, Dr. Dipl.-Chem.**
**Bürgermeister-Singer-Strasse 15**
**D-8939 Bad Wörishofen(DE)**

(54) **Zu elastischem Strahlenschutzmaterial vernetzbare Massen und Elastomere aus solchen Massen.**

(57) Die erfindungsgemäßen, zu elastischem Strahlenschutzmaterial vernetzbaren Massen auf Grundlage von SiC-gebundene Phenylgruppen enthaltendem Diorganopolysiloxan und Neutronen absorbierendem Füllstoff, wobei die Menge von Neutronen absorbierendem Füllstoff 30 bis 70 Volumenprozent, bezogen auf das Gesamtvolumen von SiC-gebundene Phenylgruppen enthaltendem Diorganopolysiloxan und Neutronen absorbierendem Füllstoff, beträgt, enthalten als SiC-gebundene Phenylgruppen enthaltendes Diorganopolysiloxan solches mit durchschnittlich 10 bis 20 Molprozent SiC-gebundenen Phenylgruppen und einer durchschnittlichen Viskosität von $10^5$ bis $10^7$ mPa's bei 25°C.

EP 0 041 155 A1

Croydon Printing Company Ltd.

WACKER-CHEMIE
GMBH

München, 17. März 1980
LC-PAT/Dr.Ru/ra

Wa 7936-S

# Zu elastischem Strahlenschutzmaterial vernetzbare Massen und Elastomere aus solchen Massen

Zu elastischem Strahlenschutzmaterial vernetzbare Massen auf Grundlage von SiC-gebundene Phenylgruppen enthaltendem Diorganopolysiloxan und Neutronen absorbierendem Füllstoff sind bereits bekannt. Hierzu wird z. B. auf DE-OS 28 22 494, offengelegt 7. Dezember 1978, Brand Industrial Services Inc., verwiesen. Diese Druckschrift enthält jedoch keine Zahlenangaben über den Anteil der Phenylgruppen im SiC-gebundene Phenylgruppen enthaltendem Diorganopolysiloxan. In den Patentschriften, welche diese Druckschrift im Zusammenhang mit verwendbaren Diorganopolysiloxanen erwähnt, werden als höchster Anteil von Phenylgruppen 10 Molprozent (US 3 652 488) genannt.

Gegenüber zu elastischem Strahlenschutzmaterial vernetzbaren Massen auf Grundlage von reinem Dimethylpolysiloxan haben die erfindungsgemäßen Massen insbesondere die Vorteile, daß sie elastisches Strahlenschutzmaterial ergeben, das gegenüber gamma-Strahlen beständiger ist, größere Mengen an Neutronen absorbierendem Füllstoff enthalten kann und bei gleichem Gehalt an Neutronen absorbierendem Füllstoff wesentlich höhere Bruchdehnung und Weiterreißfestigkeit hat und damit unempfindlicher gegenüber Vibrationen und Biegebeanspruchung ist, sowie in höherem Ausmaß flammabweisend ist.

Gegenstand der Erfindung sind zu elastischem Strahlenschutzmaterial vernetzbare Massen auf Grundlage von SiC-gebundene Phenylgruppen enthaltendem Diorganopolysiloxan und Neutronen absorbierendem Füllstoff, wobei die Menge von Neutronen abosrbierendem Füllstoff 30 bis 70 Volumenprozent, bezogen auf das Gesamtvolumen von SiC-gebundene Phenylgruppen enthaltendem Diorganopolysiloxan und Neutronen absorbierendem Füllstoff, beträgt, dadurch gekennzeichnet, daß das SiC-gebundene Phenylgruppen enthaltende Diorganopolysiloxan durchschnittlich 15 bis 20 Molprozent SiC-gebundene Phenylgruppen enthält und eine durchschnittliche Viskosität von $10^5$ bis $10^7$ mPa·s bei 25 °C aufweist.

Das in den erfindungsgemäßen Massen vorliegende Diorganopolysiloxan ist vorzugsweise solches, das durch die allgemeine Formel

$$(HO)_X SiR_{3-X}(SiR_2O)_n SiR_{3-X}OH_X$$

wiedergegeben werden kann. In dieser Formel bedeutet R gleiche oder verschiedene, einwertige, gegebenenfalls substituierte Kohlenwasserstoffreste mit der Maßgabe, daß 15 bis 20 % der Anzahl der Reste R Phenylgruppen sind, n eine ganze Zahl mit einem solchen Wert, daß die Diorganopolysiloxane eine durchschnittliche Viskosität von $10^5$ bis $10^7$ mPa·s bei 25 °C aufweisen und X ist 0 oder 1.

Innerhalb bzw. entlang der Siloxankette in der oben angegebenen Formel können, was durch derartige Formeln üblicherweise nicht dargestellt wird, zusätzlich zu den Diorganosiloxaneinheiten ($SiR_2O$) noch andere Siloxaneinheiten vorliegen. Beispiele für solche anderen, meist nur als Verunreinigungen vorliegenden Siloxaneinheiten sind solche der Formeln $RSiO_{3/2}$, $R_3SiO_{1/2}$ und $SiO_{4/2}$, wobei R jeweils die oben dafür angegebene Bedeutung hat. Die Menge an solchen anderen Siloxaneinheiten ist jedoch vorzugsweise höchstens 1 Molprozent.

Vorzugsweise liegen die Phenylgruppen in Diphenylsiloxaneinheiten vor. Sie können jedoch auch z. B. in Einheiten der allgemeinen Formel

$$C_6H_5SiR'O$$

vorliegen, wobei R' einen anderen einwertigen Kohlenwasserstoffrest als die Phenylgruppe oder einen substituierten Kohlenwasserstoffrest bedeutet.

Vorzugsweise enthalten die anderen einwertigen Kohlenwasserstoffreste als die Phenylgruppe und die gegebenenfalls substituierten Kohlenwasserstoffreste jeweils 1 bis 8 Kohlenstoffatome je Rest.

Beispiele für andere Kohlenwasserstoffreste R als Phenylgruppen und damit auch für Kohlenwasserstoffreste R' sind Alkylreste, wie der Methyl- und Äthylrest, sowie Propyl-, Butyl- und Hexylreste, Alkenylreste, wie der Vinyl-, Allyl-, Äthylallyl- und Butadienylrest; Alkarylreste, wie Tolylreste, und Aralkylreste, wie der beta-Phenyläthylrest.

Beispiele für substituierte Kohlenwasserstoffreste R und R' sind insbesondere halogenierte Kohlenwasserstoffreste, wie der 3,3,3-Trifluorpropylrest, Chlorphenyl- und Bromtolylreste; und Cyanalkylreste, wie der beta-Cyanäthylrest.

Insbesondere wegen der leichteren Zugänglichkeit sind mindestens 80 % der Anzahl der anderen SiC-gebundenen organischen Reste als Phenylgruppen Methylreste.

In gleichen oder verschiedenen Molekülen der oben angegebenen Formel können die Werte für X untereinander gleich oder verschieden sein. Es können Gemische aus Molekülen mit verschiedenen Werten für n vorliegen.

In den erfindungsgemäßen Massen können beliebige, Neutronen absorbierende Füllstoffe vorliegen, die auch bisher in zu elastischem Strahlenschutzmittel vernetzbaren Massen vorliegen konnten. Besonders bevorzugt ist Borcarbid ($B_4C$) mit einer Teilchengröße von 5 bis 500 Mikrometer. Weitere Beispiele für Neutronen absorbierende Füllstoffe sind Boroxyd, Borsäure, Cadmiumoxyd und Lithiumoxyd. Es können Gemische aus verschiedenen, Neutronen absorbierendem Füllstoff vorliegen.

Zusätzlich zu die Grundlage der Massen bildendem Diorganopolysiloxan und Neutronen absorbierendem Füllstoff können die erfindungsgemäßen Massen gegebenenfalls weitere Stoffe enthalten. Beispiele für solche weiteren Stoffe sind Vernetzungsmittel, andere Füllstoffe als Neutronen absorbierende Füllstoffe, Wärmestabilisatoren, Antioxydantien, flammabweisend machende Mittel, Mittel zur Erleichterung der Verarbeitung und Pigmente.

Als Vernetzungsmittel sind peroxydische Verbindungen bevorzugt. Beispiele für als Vernetzungsmittel geeignete peroxydische Verbindungen sind Acylperoxyde, wie Dibenzoylperoxyd, Bis-(4-chlorbenzoyl)-peroxyd und Bis-(2,4-dichlorbenzoyl)-peroxyd; Alkylperoxyde und Arylperoxyde, wie Di-tert.-butylperoxyd und Dicumylperoxyd; Perketale, wie 2,5-Bis-(tert.-butylperoxy)-2,5-dimethylhexan, sowie Perester, wie Diacetylperoxydicarbonat, tert.-Butylperbenzoat, tert.-Butylperoxyisopropylcarbonat und tert.-Butylperisonanoat. Auch tert.-Butyl-beta-hydroxyäthylperoxyd ist geeignet. Weitere Beispiele für Vernetzungsmittel, die in den erfindungsgemäßen Massen vorliegen können, sind als Radikale bildende Mittel bekannte Azoverbindungen, wie Azoisobuttersäurenitril, oder, wobei Voraussetzung ist, daß die die Grundlage der Masse bildenden Diorganopolysiloxane 2 SiC-gebundene Alkenylgruppen, insbesondere Vinylgruppen, je Molekül enthalten, Kombinationen von Methylwasserstoffpolysiloxan mit Platinkatalysatoren.

Enthalten die erfindungsgemäßen Massen als Vernetzungsmittel peroxydische Verbindungen, so vorzugsweise in Mengen von 0,5

bis 5 Gewichtsprozent, bezogen auf das Gesamtgewicht der jeweiligen Masse.

Beispiele für andere Füllstoffe als Neutronen absorbierende Füllstoffe sind verstärkende Füllstoffe, wie pyrogen erzeugtes Siliciumdioxyd mit einer Oberfläche von 100 bis 300 $m^2/g$, und nicht-verstärkende Füllstoffe wie Quarzmehl. Vorzugsweise enthalten die erfindungsgemäßen Massen pyrogen erzeugtes Siliciumdioxyd mit einer Oberfläche von 100 bis 300 $m^2/g$ in Mengen von höchstens 30 Gewichtsprozent, bezogen auf das Gesamtgewicht der übrigen Bestandteile der jeweiligen Masse.

Beispiele für flammabweisend machende Mittel sind Graphit, Aluminiumoxydtrihydrat, das gegebenenfalls an seiner Oberfläche Organosiloxygruppen aufweisen kann, und Platin oder Platinverbindungen bzw. Platinkomplexe und Gemische aus mindestens zwei solcher Stoffe.

Enthalten die erfindungsgemäßen Massen Graphit, so vorzugsweise in Mengen von 1 bis 10 Gewichtsprozent, bezogen auf das Gesamtgewicht der übrigen Bestandteile der jeweiligen Masse.

Enthalten die erfindungsgemäßen Massen Platin oder Platinverbindungen bzw. Platinkomplexe, insbesondere in Kombination mit Graphit, so vorzugsweise in Mengen von 1 bis 10 Platinelement Gewichtsteilen je Million Gewichtsteile der jeweiligen Masse.

Enthalten die erfindungsgemäßen Massen Aluminiumoxydtrihydrat, so vorzugsweise in Mengen von 10 bis 40 Gewichtsprozent, bezogen auf das Gesamtgewicht der übrigen Bestandteile der jeweiligen Masse. Beispiele für Mittel zur Erleichterung der Verarbeitung sind Organopolysiloxane mit einer durchschnittlichen Viskosität von 100 bis 1000 mPa s bei 25 °C und 10 bis 20 Molprozent SiC-gebundenen Phenylgruppen. Enthalten die erfindungsgemäßen Massen derartige Mittel zur Erleichterung der Verarbeitung, so vorzugsweise in Mengen von 1 bis 10 Gewichtsprozent, bezogen auf das Gesamtgewicht der übrigen Bestandteile der jeweiligen Masse.

Zur Bereitung der erfindungsgemäßen Massen können alle Bestandteile der jeweiligen Masse in beliebiger Reihenfolge miteinander, z. B. auf einer Walze oder in einem Kneter, vermischt werden. Dieses Vermischen kann bei Raumtemperatur erfolgen. Dieses Vermischen kann aber auch bei höheren Temperaturen, z. B. bei einer Temperatur oder mehr Temperaturen im Bereich von 35 bis 200 °C erfolgen. Dabei dürfen hitzeempfindliche Bestandteile, wie organische peroxydische Verbindungen, natürlich nur bei Temperaturen eingemischt werden, bei denen sie sich nicht verändern.

Die Formgebung der erfindungsgemäßen Massen kann in beliebiger, für die Formgebung von vernetzbaren Massen, die Diorganopolysiloxane mit einer Viskosität von mindestens $10^5$ mPa·s bei 25 °C enthalten, bekannter Weise, z. B. durch Injection molding (= Spritzgießen), Transfer molding (= Spritzpressen) oder andere Arten von Pressen oder Extrudieren, erfolgen.

Die Vernetzung der erfindungsgemäßen Massen kann in beliebiger, für das jeweils verwendete Vernetzungsmittel bekannter Weise, z. B. im Falle eines Gehalts an peroxydischem Vernetzungsmittel, durch Erwärmen der Massen auf 120 bis 180 °C, erfolgen. Vorzugsweise wird nach diesem Erwärmen noch weiter erwärmt (sogenanntes "Tempern"), z. B. 4 Stunden auf 200 °C, oder wenn die aus den Massen hergestellten Gegenstände dicker als 8 mm sind, 4 bis 6 Stunden auf 150 °C und danach 4 bis 6 Stunden auf 200 °C.

Strahlenschutzmaterial aus den erfindungsgemäßen Massen ist gegenüber einer gamma-Strahlung von bis zu $10^{11}$ rad beständig und kann mindestens $10^{17}$ Neutronen je $cm^2$ Oberfläche absorbieren.

<u>Beispiel</u>

In einem 500-l-Kneter werden 180 kg eines Vinyldimethylsiloxygruppen als endständige Einheiten aufweisenden Diorganopolysiloxanes aus 82,9 Molprozent Dimethylsiloxaneinheiten, 17 Molprozent Diphenylsiloxaneinheiten und 0,1 Molprozent Vinylmethylsiloxaneinheiten, das also 17 Molprozent SiC-gebundene Phenyl-

BAD ORIGINAL

gruppen und etwa 0,1 Molprozent SiC-gebundene Vinylgruppen enthält, mit einer Viskosität von $15 \cdot 10^6$ mPa·s bei 25 °C mit 450 kg, also 52 Volumenprozent, Borcarbid und 20 kg pyrogen erzeugtem Siliciumdioxyd mit einer Oberfläche von 150 $m^2/g$ und 3 kg eines Vinyldimethylsiloxygruppen als endständige Einheiten aufweisenden Diorganopolysiloxans aus 92 Molprozent Dimethylsiloxaneinheiten und 18 Molprozent Diphenylsiloxaneinheiten, das also 18 Molprozent SiC-gebundene Phenylgruppen enthält, mit einer Viskosität von 100 mPa·s bei 25 °C vermischt. Dieses Vermischen erfolgt bei 150 °C. Nach dem Abkühlen auf Raumtemperatur werden in die so erhaltene Mischung 20 kg Graphit mit einer spezifischen Oberfläche von 10 $m^2/g$, 1 kg einer 1 gewichtsprozentigen Lösung von $H_2PtCl_6 \cdot 6H_2O$ in Äthylenglykolmonomethyläther sowie 7 kg Dicumylperoxyd eingemischt. Aus der so erhaltenen zum Elastomeren vernetzbaren Masse werden durch 15 Minuten Erwärmen auf 165 °C unter einem Druck von 100 bar (abs.) und 4 Stunden druckloses Erwärmen auf 200 °C Platten mit einer Dicke von 2 mm hergestellt.

Bei diesen Elastomeren bestimmte Eigenschaften sind in der weiter unten folgenden Tabelle angegeben.

Vergleichsversuch

Die im Beispiel beschriebene Arbeitsweise wird wiederholt mit der Abänderung, daß 180 kg eines durch Trimethylsilygruppen endblockierten Diorganopolysiloxans aus 99,9 Molprozent Dimethylsiloxaneinheiten und 0,1 Molprozent Vinylmethylsiloxaneinheiten mit einer Viskosität von $10 \cdot 10^6$ mPa·s bei 25 °C anstelle des im Beispiel näher beschriebenen Diorganopolysiloxans mit 17 Molprozent SiC-gebundenen Phenylgruppen eingesetzt werden.

Bei diesem Elastomeren bestimmte Eigenschaften sind in der folgenden Tabelle angegeben. Dabei wird das Ausmaß der Flammabweisung jeweils durch den LOI-(Limited Oxygen Index)-Wert, der gemäß ASTM-D 28 63-70 bestimmt wird, wiedergegeben. Je höher dieser Wert ist, um so höher ist das Ausmaß der Flammabweisung.

BAD ORIGINAL

| | Beispiel | Vergleichsversuch |
|---|---|---|
| Shore-A-Härte | 80 | 82 |
| Bruchdehnung | 160 | 50 |
| Zugfestigkeit $N/mm^2$ | 1,9 | 2 |
| Weiterreißfestigkeit N/mm | 15 | 6 |
| LOI-Wert % | 60 | 52 |

Patentansprüche

1. Zu elastischem Strahlenschutzmaterial vernetzbare Massen auf Grundlage von SiC-gebundene Phenylgruppen enthaltendem Diorganopolysiloxan und Neutronen absorbierendem Füllstoff, wobei die Menge von Neutronen absorbierendem Füllstoff 30 bis 70 Volumenprozent, bezogen auf das Gesamtvolumen von SiC-gebundene Phenylgruppen enthaltendem Diorganopolysiloxan und Neutronen absorbierendem Füllstoff, beträgt, dadurch gekennzeichnet, daß das SiC-gebundene Phenylgruppen enthaltende Diorganopolysiloxan durchschnittlich 15 bis 20 Molprozent SiC-gebundene Phenylgruppen enthält und eine durchschnittliche Viskosität von $10^5$ bis $10^7$ mPa.s bei 25 °C aufweist.

2. Massen nach Anspruch 1, dadurch gekennzeichnet, daß die Phenylgruppen in Diphenylsiloxaneinheiten vorliegen.

3. Elastomere aus Massen nach Anspruch 1 oder 2.

0041155

Europäisches Patentamt

# EUROPÄISCHER RECHERCHENBERICHT

Nummer der Anmeldung
EP 81 10 3608

| EINSCHLÄGIGE DOKUMENTE | | | KLASSIFIKATION DER ANMELDUNG (Int. Cl.3) |
|---|---|---|---|
| Kategorie | Kennzeichnung des Dokuments mit Angabe, soweit erforderlich, der maßgeblichen Teile | betrifft Anspruch | |
| | US - A - 4 176 093 (H.L. ZOCH)<br>* Anspruch 1; Spalte 5, Zeilen 13-28, 40-50; Spalte 7, Zeilen 23-31 *<br>-- | 1-3 | C 08 L 83/04<br>G 21 F 1/10 |
| | US - A - 3 114 721 (GENERAL ELECTRIC)<br>* Ansprüche 1,3-5; Spalte 2, Zeilen 59-63, 64-71 *<br>-- | 1-3 | |
| A | FR - A - 1 270 724 (DOW CORNING)<br>* Zusammenfassung 1°,2°,3° *<br>-- | 1 | RECHERCHIERTE SACHGEBIETE (Int. Cl.3)<br>C 08 L 83/04<br>83/08<br>G 21 F 1/10<br>C 08 K 3/38<br>3/22 |
| A | US - A - 3 457 214 (F.J. MOPIC)<br>* Anspruch 1 *<br>-- | 1 | |
| A | DE - A - 1 464 620 (GENTEX)<br>* Anspruch 1; Seite 6 *<br>---- | 1 | |

KATEGORIE DER GENANNTEN DOKUMENTE
X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 14-09-1981 | DEPYPER |